# FASCICULE DE BREVET EUROPEEN

(11) **EP 2 413 249 B1**
(45) Date de publication et mention de la délivrance du brevet: **20.03.2013**
(21) Numéro de dépôt: 11175113.7
(22) Date de dépôt: 22.07.2011
(51) Int. Cl.: G06F 13/42

(54) **Protocole de communication sur bus unifilaire**
Kommunikationsprotokoll auf Eindrahtübertragungsleitung
Communication protocol on single-wire bus

(30) Priorité: 27.07.2010 FR 1056148
(43) Date de publication de la demande: 01.02.2012
(73) Titulaire: STMicroelectronics (Rousset) SAS, 13790 Rousset (FR)
(72) Inventeur: Bas, Gilles, 30640 Beauvoisin (FR); Chalopin, Hervé, 13400 Aubagne (FR); Tailliet, François, 13710 Fuveau (FR)
(74) Mandataire: de Beaumont, Michel

(56) Documents cités:
- WO-A1-2010/010278
- WO-A2-2005/020081
- US-A- 5 903 607

## Description

### Domaine de l'invention

La présente invention concerne de façon générale les circuits électroniques et plus particulièrement, la transmission de données numériques entre deux circuits dans un système de transmission de type maître-esclave. L'invention s'applique plus particulièrement à un protocole de communication sur bus unifilaire.

### Exposé de l'art antérieur

Un protocole dit sur bus unifilaire est généralement utilisé pour transmettre des données entre plusieurs circuits électroniques en utilisant un seul fil de communication (en plus d'une référence commune ou masse). Dans un protocole unifilaire, un signal de synchronisation et des données (et le cas échéant l'alimentation du récepteur) sont transmis sur le même fil.

Un protocole de communication sur bus unifilaire est décrit, par exemple, dans le brevet US 5 903 607.

Une limitation d'un tel protocole est qu'il est généralement monocanal.

### Résumé

Un objet d'un mode de réalisation de la présente invention est de proposer un protocole de communication sur bus unifilaire qui pallie tout ou partie des inconvénients des protocoles connus.

Un autre objet d'un mode de réalisation de la présente invention est de proposer un protocole bi-canal.

Un autre objet d'un mode de réalisation de la présente invention est de proposer une solution compatible avec le caractère bidirectionnel d'un protocole unifilaire.

Pour atteindre tout ou partie des ces objets ainsi que d'autres, il est prévu un procédé de transmission de données sur un bus unifilaire dans lequel :
un premier canal de communication est défini par des impulsions de durées différentes selon l'état du bit transmis et fonction d'une durée de référence ; et
un second canal de communication est défini par ladite durée de référence.

Selon un mode de réalisation de la présente invention, chaque impulsion du premier canal est d'une durée supérieure ou inférieure à la durée de référence selon l'état du bit transmis.

Selon un mode de réalisation de la présente invention, ladite durée de référence est choisie dans un ensemble de durées en fonction d'un code transmis sur le second canal.

Selon un mode de réalisation de la présente invention, ladite durée de référence est fixe pour un mot de plusieurs bits.

Selon un mode de réalisation de la présente invention, chaque mot du premier canal débute par une impulsion de référence dont la durée fournit la durée de référence.

Selon un mode de réalisation de la présente invention, le bus est, au repos, à un premier niveau de tension, lesdites impulsions étant séparées les unes des autres par des périodes de durée fixe à un second niveau de tension.

Selon un mode de réalisation de la présente invention, lesdites impulsions ont des durées correspondant à des multiples desdites périodes de durée fixe.

Selon un mode de réalisation de la présente invention, le premier niveau est supérieur au second.

On prévoit également un dispositif d'émission sur un bus unifilaire.

On prévoit également un dispositif de réception sur bus unifilaire.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente, partiellement et sous forme de blocs, deux circuits susceptibles de communiquer selon un protocole maître-esclave sur un bus unifilaire ;
La figure 2 est un chronogramme illustrant une communication usuelle entre les deux circuits de la figure 1 ;
la figure 3 est un schéma blocs partiel d'un mode de mise en oeuvre d'un protocole de communication bi-canal ;
les figures 4A, 4B, 4C et 4D sont des chronogrammes illustrant le fonctionnement du système illustré en figure 3 ; et
la figure 5 est un chronogramme illustrant une transmission bidirectionnelle bi-canal sur bus unifilaire.

### Description détaillée

De mêmes éléments ont été désignés par de mêmes références aux différentes figures. Par souci de clarté, seuls les éléments utiles à la compréhension de l'invention ont été représentés et seront décrits. En particulier, les mécanismes de génération des données à transmettre n'ont pas été détaillés, l'invention étant compatible avec les mécanismes habituellement utilisés pour transmettre des données dans un protocole unifilaire. De plus, les circuits d'émission et de réception n'ont pas non plus été détaillés, l'invention étant là encore compatible avec les systèmes usuels.

Pour créer un protocole bi-canal, on aurait pu penser faire varier les niveaux de tension sur le bus pour définir un second canal de communication. Toutefois, une telle solution serait peu adaptée à des circuits dans lesquels les niveaux de tension sont susceptibles de varier pour d'autres raisons (longueur de ligne, perturbations diverses, etc.). De plus, cela rendrait plus difficile une récupération d'énergie par le récepteur dans la mesure où cela imposerait un niveau bas plus proche de la masse.

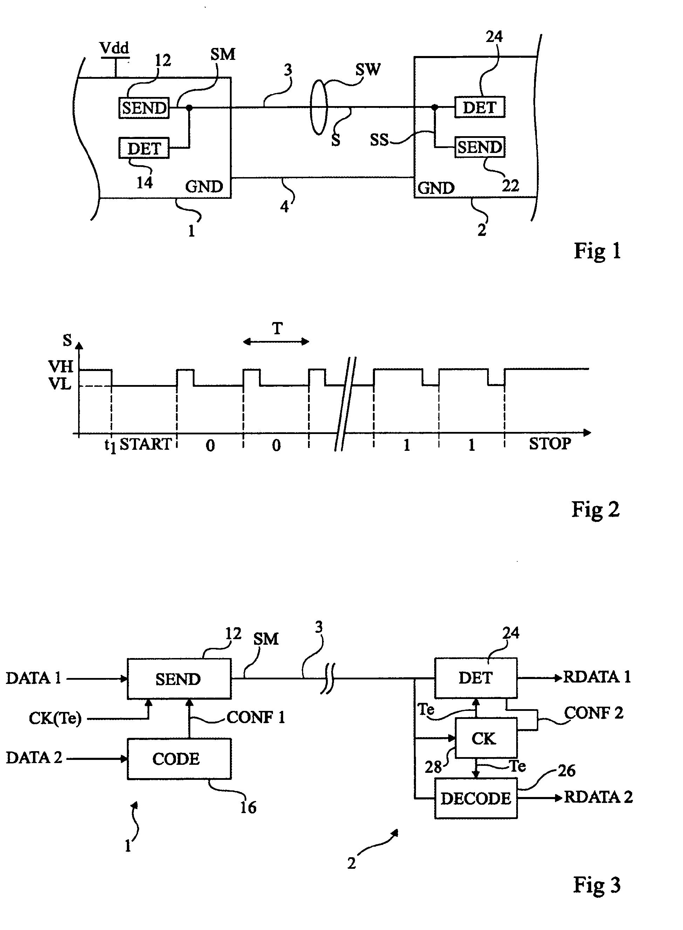

La figure 1 est un schéma bloc partiel d'un mode de réalisation d'un système de communication sur bus unifilaire. Dans l'exemple de la figure 1, un circuit 1, considéré arbitrairement comme un circuit maître, est susceptible de communiquer selon un protocole unifilaire SW avec un circuit distant 2. Les circuits 1 et 2 sont reliés par un fil 3 constituant le bus unifilaire et partagent le même potentiel de référence (liaison 4 - masse GND).

Chaque circuit 1, 2 comporte, par exemple, un circuit d'émission (SEND) 12, respectivement 22, et un circuit de réception (DET) 14, respectivement 24. Pour une communication du circuit 1 vers le circuit 2, le circuit 1 impose un signal SM sur le bus. Pour une communication du circuit 2 vers le circuit 1, le circuit 2 impose un signal SS sur le bus. Le circuit qui provoque la transmission impose l'horloge sur le bus. Pour simplifier, on a schématisé en figure 1 les signaux SM et SS comme provenant respectivement des circuits 12 et 22 et on considère que les circuits 14 et 24 ne voient que l'état du signal S présent sur le bus. Par ailleurs, les circuits 1 et 2 comportent d'autres éléments, notamment d'exploitation des signaux transmis. Indépendamment de la communication, le circuit maître 1 alimente généralement le circuit esclave 2 comme cela est illustré en figure 1 où seul le circuit maître 1 reçoit un potentiel d'alimentation Vdd. Le circuit esclave 2 tire son alimentation d'une régulation du signal S dont le niveau de repos, généralement imposé par le circuit 1, est à un niveau haut VH.

La figure 2 est un chronogramme représentant un exemple d'allure du signal S illustrant une communication entre les circuits 1 et 2.

Le protocole unifilaire consiste à transmettre, sur le bus 3, à la fois un signal d'horloge ou de synchronisation et les données.

Pour transmettre des données du circuit 1 vers le circuit 2, le circuit 1 module le signal SM en amplitude entre deux niveaux VH et VL, par exemple tous deux positifs pour préserver l'alimentation du circuit 2. Cette modulation se retrouve sur le signal S. Le niveau de repos du bus est le niveau haut VH. Dans l'exemple représenté, une transmission est initialisée par un bit de démarrage START dans lequel le signal S est forcé (instant t1) au niveau VL. Cela initialise le circuit esclave 2 et le prépare à recevoir des données. Le circuit 1 module le niveau du signal S au rythme d'un signal d'horloge qui fixe le débit de la transmission. La transmission d'un bit au niveau 0 s'effectue, par exemple, avec une impulsion de niveau VL d'une durée inférieure à la demi-période du signal d'horloge (dans l'exemple représenté, un quart de la période T) alors qu'un niveau 1 est codé avec une impulsion de niveau VL de durée supérieure à la demi-période de ce signal (par exemple trois quarts de la période T). Le circuit esclave 2 détecte la variation d'amplitude et la durée correspondante des impulsions haute et basse pour déterminer la valeur des bits transmis. Une fin de transmission (généralement la fin d'une trame) est codée par le circuit 1 sous la forme d'un état haut (libération du bus) pendant une durée supérieure à la période T.

Le bus unifilaire SW est un bus de communication bidirectionnel alterné (semiduplex ou half-duplex). Pour transmettre des données du circuit esclave 2 vers circuit maître 1, le circuit esclave modifie la charge qu'il impose sur le fil S selon le niveau du bit qu'il souhaite transmettre. Là encore, le débit de la transmission est fixé par un signal d'horloge au rythme duquel le circuit 2 module l'amplitude du signal S. L'horloge est ici fixée par une horloge interne du circuit 2 alors que le niveau de repos (VH) du bus reste fixé par le circuit 1.

La figure 3 est un schéma bloc illustrant un mode de réalisation d'un système bi-canal sur bus unifilaire. Pour simplifier la représentation de la figure 3, seule la partie émission côté circuit maître 1 et la partie réception côté circuit esclave 2 ont été représentées.

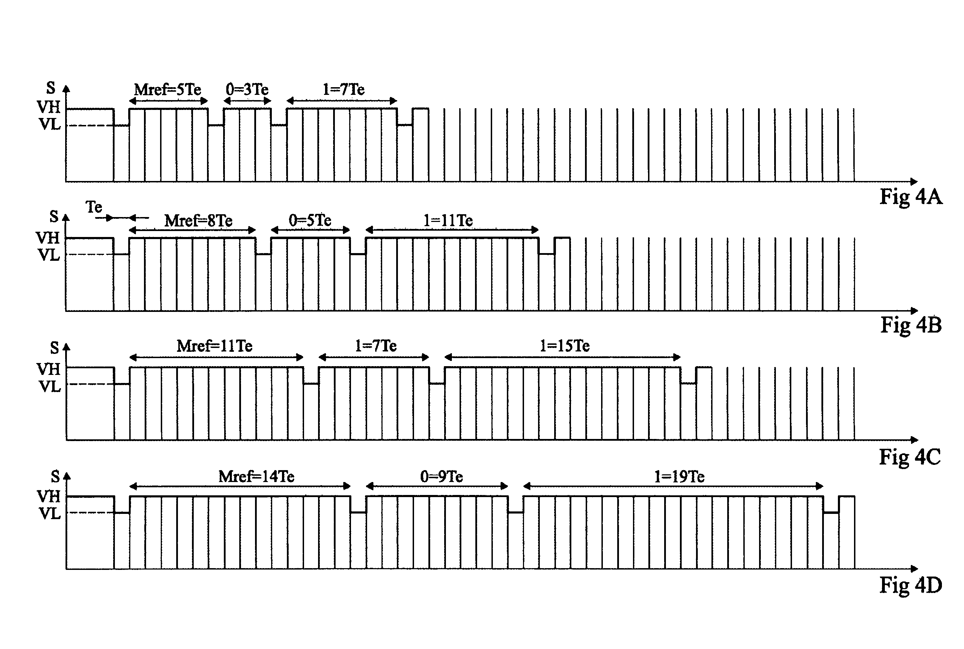

Les figures 4A, 4B, 4C et 4D sont des chronogrammes illustrant le fonctionnement du système de la figure 3. Ces figures représentent quatre exemples de signal S sur le bus 3 illustrant quatre états possibles pour une transmission sur un second canal.

Selon ce mode de réalisation, et à la différence du protocole illustré par la figure 2, les bits d'un premier canal sont codés par des impulsions à l'état haut VH sur un nombre de périodes d'horloge Te différent selon l'état 0 ou 1 à transmettre, chaque bit étant séparé du suivant par un créneau au niveau bas de durée fixe, par exemple une période d'horloge Te.

En pratique, un mot de données à transmettre est précédé d'une impulsion Mref de référence, émise par le circuit 12 et dont la durée est mesurée par le récepteur. L'impulsion Mref permet une synchronisation des circuits. Les deux circuits 1, 2 disposent d'horloges internes ayant des fréquences identiques (les plus proches possibles). Ces horloges internes sont de période inférieure ou égale à la période Te. Côté récepteur, l'horloge interne est utilisée par un compteur pour déterminer la valeur (par exemple, le nombre de périodes Te) de l'impulsion Mref et pouvoir ainsi discriminer les états 1 et 0 des impulsions suivantes transmettant les bits. Si l'impulsion codant le bit est d'une durée inférieure à la durée, dite de référence, de l'impulsion Mref, l'état est 0 (par convention arbitraire). Si l'impulsion codant le bit est d'une durée supérieure à la durée de référence, l'état est 1. La discrimination entre les états 0 et 1 des bits du premier canal s'effectue en comparant la durée des impulsions par rapport à la durée de référence.

Pour coder le second canal, on prévoit de rendre variable les durées de référence du premier canal. Ainsi, de façon fonctionnelle et comme l'illustre schématiquement la figure 3, le bloc d'émission 12 reçoit non seulement un premier flux de données DATA1 à transmettre et le signal d'horloge CK de période Te (multiple de l'horloge interne), mais également un signal CONF1 qui fixe la durée de référence, donc les durées respectives des impulsions affectées aux états 0 et 1 du premier canal. Le signal CONF1 provient d'un circuit de codage 16 (CODE) qui l'établit en fonction d'un deuxième flux de données DATA2 à transmettre sur le deuxième canal.

Dans l'exemple des figures 4A à 4D, on suppose que le signal CONF1 configure le circuit 12 pour qu'il code la durée de référence, respectivement à 5, 8, 11 et 14 périodes Te et code les bits du signal DATA1 à l'état 0 respectivement sur 3, 5, 7 et 9 périodes du signal Te et les bits à l'état 1 sur respectivement 7, 11, 15 et 19 périodes Te. Ce codage permet de transmettre, sur le second canal, une paire de bits à chaque mot du premier canal.

Côté récepteur 2, son circuit de détection 24 reçoit le signal modulé sur le bus 3. Ce signal est envoyé en parallèle sur un circuit 28 d'extraction d'horloge (CK) et sur un circuit 26 (DECODE) chargé d'extraire les données du deuxième canal RDATA2. Selon un premier exemple, la période Te est connue et fixe des deux côtés de la transmission. Selon un autre exemple, le circuit 28 extrait la période Te (horloge CK) des créneaux au niveau bas présents sur le signal S. Le circuit 28 fournit également, en décodant l'impulsion Mref, un signal de configuration CONF2 du détecteur 24 pour que ce dernier décode correctement les données RDATA1 en fonction de la durée de référence (nombre de périodes Te) fixant respectivement les états 0 et 1.

Le choix du nombre de périodes d'horloge Te d'écart entre les différents motifs de référence Mref peut varier. De préférence, on prévoit au moins trois périodes d'écart entre chaque motif de référence pour améliorer la fiabilité de la détection.

On notera que les deux canaux n'interfèrent pas l'un avec l'autre et sont indépendants.

Par exemple, et pour être compatible avec les données habituellement transmises dans des systèmes utilisant un bus unifilaire, les mots de données sont transmis par octet. Chaque octet est alors de préférence précédé d'une impulsion de référence Mref, ce qui permet de transmettre sur le second canal au moins un bit par octet du premier canal (un bit par octet pour un codage parmi deux impulsions de référence, deux bits par octet pour un codage parmi quatre impulsions de référence, etc.).

Le début d'une transmission est indiqué par un motif spécifique, par exemple, un état bas pendant une période Te suivi d'un état haut définissant la durée Mref, puis d'un nouveau passage à l'état bas. Ce motif sera interprété comme un début de transmission si le récepteur de la trame est dans un état de réinitialisation ou s'il reçoit des bits successifs entre lesquels s'intercale la durée Mref et reconnaît le positionnement de la durée Mref en fonction du nombre et de la valeur des bits précédemment reçus.

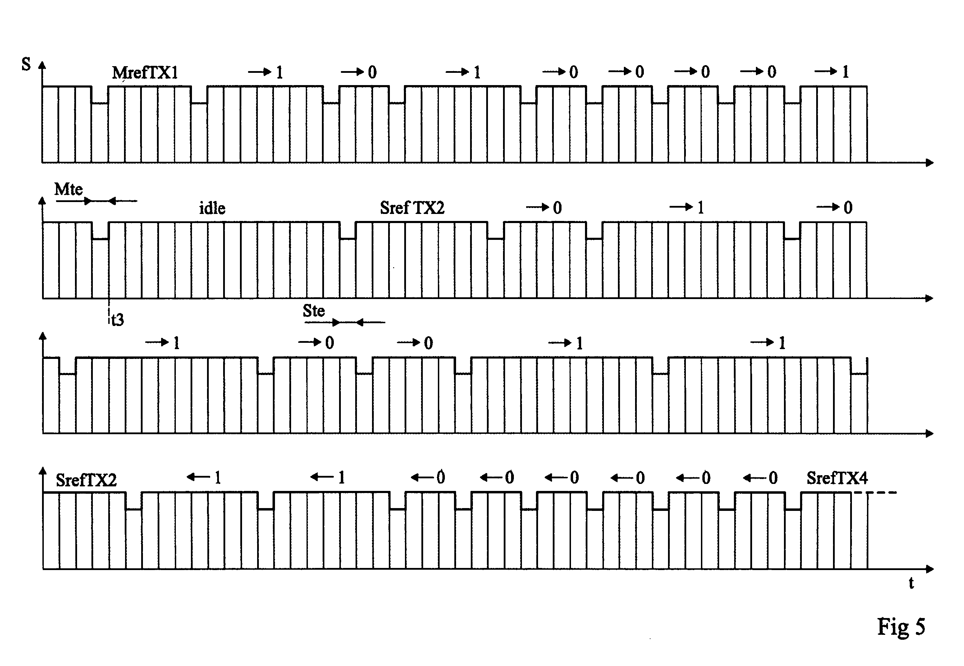

La figure 5 est un chronogramme illustrant la transmission d'une trame dans le sens maître-esclave et la réponse de l'esclave au maître. Le chronogramme de la figure 5 est représenté sur quatre lignes qui se lisent successivement de haut en bas. On suppose une fin de trame envoyée par le circuit 1 qui se termine par un mot "10100001" précédé par une impulsion de référence Mref (code TX1) correspondant par exemple au code de la figure 4A. Lorsque le circuit maître a terminé son émission, il libère le bus qui se trouve alors en attente (idle, instant t3). Le circuit 2 peut alors répondre. Dans cet exemple, le circuit esclave envoie une impulsion de référence SRefTX2 correspondant par exemple au codage de la figure 4B puis un mot de 8 bits "01010011". Ce premier mot est suivi d'un deuxième mot "11000000" avec le même code TX2. Au troisième mot, le circuit esclave bascule sur un code TX4 correspondant, par exemple, au codage de la figure 4D pour le mot suivant.

Dans le sens esclave vers maître, la période, notée STe, conditionnant le codage sur le second canal, est fixée par le circuit esclave à une valeur théoriquement identique à la période MTe.

Il ressort de ce qui précède que le circuit 1 est équipé de circuits de détection et de décodage similaires aux circuits 24, 26 et 28 et que le circuit 2 est équipé de circuits d'émission et de codage similaires aux circuits 12 et 16 du circuit 1.

Le codage avec la durée de référence est de préférence effectué pour chaque mot. Cela permet de transmettre une information du deuxième canal pour chaque mot du premier canal. Avec un codage sur quatre durées de référence, chaque information transmise représente en fait un codage sur deux bits.

On peut se contenter du codage du deuxième canal par l'impulsion de référence MRef ou SRef dans la mesure où les périodes Te côté circuit maître et côté circuit esclave sont a priori identiques.

Pour le cas où l'on craigne une imprécision par décalage temporel du signal, on peut interpréter la durée des états 1 et des états 0 sur tout l'octet. Cela permet, par exemple par une analyse statistique, de résoudre d'éventuelles imprécisions (si la majorité des impulsions du premier canal respecte ce qui devrait correspondre aux durées associées à la durée de référence, on considère que le code du second canal a la valeur correspondante). Toutefois, cela requiert de compter et de mémoriser le nombre de périodes Te sur tout le mot.

La mise en oeuvre de l'invention tire profit du fait que, dans les applications utilisant un bus unifilaire, les durées de référence sont généralement programmables dans les circuits d'émission et de réception. Par conséquent, la mise en oeuvre de l'invention ne requiert en pratique peu ou pas de modification structurelle des circuits.

Selon un exemple particulier de réalisation, le fait de coder, sur un canal séparé, deux bits supplémentaires par octet de données du premier canal permet, sur une trame de 32 octets du premier canal, de coder 64 bits sur le second canal.

Le nombre de bits transmis par le second canal peut varier pourvu que ce nombre soit compatible avec la durée maximale attendue pour les données du premier canal. En effet, plus ce nombre est élevé, plus la durée de référence est importante.

La présence d'un second canal offre de nombreuses possibilités dans des systèmes exploitant habituellement des bus unifilaires.

Par exemple, le deuxième canal permet d'identifier le maître et/ou l'esclave dans un système de communication de plus de deux circuits.

Selon un autre exemple d'application, le deuxième canal permet de coder un identifiant, par exemple, pour associer un consommable à un type d'appareil (cartouche d'encre par rapport à imprimante, batterie de téléphone pour un téléphone) ou à une marque. Par exemple, un consommable d'imprimante intégrant un circuit esclave devient incompatible avec une autre imprimante s'il n'est pas capable de décoder le deuxième canal.

Selon encore un autre exemple, le canal supplémentaire permet de transmettre, en même temps que les données, une signature de celles-ci. Dans une approche habituelle, une signature est transmise sur le même canal que les données utiles ce qui allonge la durée des trames. Avec les modes de réalisation décrits, la signature peut être intercalée dans la transmission. Tout mécanisme de signature ou de code correcteur d'erreur peut être utilisé.

Selon encore un autre exemple, le second canal est utilisé pour envoyer une commande particulière aux autres circuits. Par exemple, dans une application d'une batterie par rapport à un équipement ou d'une cartouche par rapport à une imprimante, le deuxième canal peut être utilisé pour transmettre un message indicateur que la batterie ou que la cartouche d'imprimante est vide.

Selon encore un autre exemple, chaque canal peut être dédié à une application du circuit maître à destination du même circuit esclave.

Divers modes de réalisation ont été décrits. Diverses variantes et modifications sont à la portée de l'homme du métier. De plus, la mise en oeuvre pratique de l'invention en utilisant des circuits en eux-mêmes connus et en les programmant convenablement est à la portée de l'homme du métier à partir des indications fonctionnelles données ci-dessus. En outre, le choix du nombre de bits de codage du premier canal ainsi que la fréquence de variation de ce codage (dans l'exemple décrit tous les octets) peut varier en fonction des applications.

## Revendications

1. Procédé de transmission de données sur un bus unifilaire (3) dans lequel :
un premier canal de communication est défini par des impulsions de durées différentes selon l'état (0, 1) du bit transmis en fonction d'une durée de référence (5Te, 8Te, 11Te, 14Te) ; et
un second canal de communication est défini par ladite durée de référence.

2. Procédé selon la revendication 1, dans lequel chaque impulsion du premier canal est d'une durée supérieure ou inférieure à la durée de référence (5Te, 8Te, 11Te, 14Te) selon l'état (0, 1) du bit transmis.

3. Procédé selon la revendication 1 ou 2, dans lequel ladite durée de référence (5Te, 8Te, 11Te, 14Te) est choisie dans un ensemble de durées en fonction d'un code transmis sur le second canal.

4. Procédé selon l'une quelconque des revendications 1 à 3, dans lequel ladite durée de référence (5Te, 8Te, 11Te, 14Te) est fixe pour un mot de plusieurs bits.

5. Procédé selon la revendication 4, dans lequel chaque mot du premier canal débute par une impulsion de référence (Mref, Sref) dont la durée fournit la durée de référence (5Te, 8Te, 11Te, 14te).

6. Procédé selon l'une quelconque des revendications 1 à 5, dans lequel le bus (3) est, au repos, à un premier niveau de tension (VH), lesdites impulsions étant séparées les unes des autres par des périodes de durée fixe (Te) à un second niveau de tension (VL).

7. Procédé selon la revendication 6, dans lequel lesdites impulsions ont des durées correspondant à des multiples desdites périodes (Te) de durée fixe.

8. Procédé selon la revendication 7, dans lequel le premier niveau (VH) est supérieur au second (VL).

9. Dispositif d'émission (1) sur un bus unifilaire comportant des moyens pour la mise en oeuvre du procédé conforme à l'une quelconque des revendications 1 à 8.

10. Dispositif de réception (2) sur bus unifilaire comportant des moyens pour la mise en oeuvre du procédé selon l'une quelconque des revendications 1 à 8.

## Claims

1. A method of data transmission over a single-wire bus (3), wherein:
a first communication channel is defined by pulses of different durations according to the state (0, 1) of the transmitted bit and depending on a reference duration (5Te, 8Te, 11Te, 14Te); and
a second communication channel is defined by said reference duration.

2. The method of claim 1, wherein each pulse of the first channel has a duration greater or smaller than the reference duration (5Te, 8Te, 11Te, 14Te) according to the state (0, 1) of the transmitted bit.

3. The method of claim 1 or 2, wherein said reference duration (5Te, 8Te, 11Te, 14Te) is selected from a set of durations according to a code transmitted over the second channel.

4. The method of any of claims 1 to 3, wherein said reference duration (5Te, 8Te, 11Te, 14Te) is fixed for a word of several bits.

5. The method of claim 4, wherein each word of the first channel starts with a reference pulse (Mref, Sref) having its duration setting the reference duration (5Te, 8Te, 11Te, 14Te).

6. The method of any of claims 1 to 5, wherein the bus (3) is, when idle, at a first voltage level (VH), said pulses being separated from one another by periods of fixed duration (Te) at a second voltage level (VL).

7. The method of claim 6, wherein said pulses have durations corresponding to multiples of said periods (Te) of fixed duration.

8. The method of claim 7, wherein the first level (VH) is greater than the second one (VL).

9. A device (1) of transmission over a single-wire bus comprising means for implementing the method of any of claims 1 to 8.

10. A device (2) of reception over a single-wire bus comprising means for implementing the method of any of claims 1 to 8.

## Patentansprüche

1. Ein Verfahren zur Datenübertragung über einen Einzeldraht-Bus (3), wobei:
ein erster Kommunikations- bzw. Übertragungskanal definiert ist, durch Impulse von unterschiedlichen Dauern, entsprechend dem Zustand (0, 1) des übertragenen Bits und abhängig von einer mit Referenz- bzw. Bezugsdauer (5Te, 8Te, 11 Te, 14Te); und
ein zweiter Kommunikations- bzw. Übertragungskanal durch die erwähnte Referenzdauer definiert ist

2. Verfahren nach Anspruch 1, wobei jeder Impuls des ersten Kanals eine Dauer besitzt, die größer oder kleiner ist als die Bezugs- oder Referenzdauer (5Te, 8Te, 11 Te, 14Te) entsprechend dem Zustand (0, 1) des übertragenen Bits.

3. Verfahren nach Anspruch 1 oder 2, wobei die erwähnte Referenzdauer (5Te, 8Te, 11Te, 14Te) ausgewählt ist, aus einem Satz von Dauern, gemäß einem über den zweiten Kanal übertragenen Code.

4. Verfahren nach einem der Ansprüche 1 bis 3, wobei die Referenzdauer (5Te, 8Te, 11Te, 14Te) für ein Wort aus mehreren Bits festgelegt ist.

5. Verfahren nach Anspruch 4, wobei jedes Wort des ersten Kanals mit einem Referenzimpuls (Mref, Sref) startet, dessen Dauer die Referenzdauer (5Te, 8Te, 11Te, 14Te) einstellt.

6. Verfahren nach einem der Ansprüche 1 bis 5, wobei der Bus (3) im Leerlauf sich auf einen ersten Spannungspegel (VH) befindet, wobei die erwähnten Impulse voneinander durch Perioden fester Dauer (Te) auf einem zweiten Spannungspegel (VL) getrennt sind.

7. Verfahren nach Anspruch 6, wobei die Impulse Dauern besitzen, die Mehrfache der erwähnten Perioden (Te) der festen Dauer entsprechen.

8. Verfahren nach Anspruch 7, wobei der erste Pegel (VH) größer ist als der zweite (VL).

9. Eine Vorrichtung (1) zur Übertragung über einen, einen einzigen Draht aufweisenden Bus, wobei Mittel zur Implementierung des Verfahrens nach einem der Ansprüche 1 bis 8 vorgesehen sind.

10. Vorrichtung (2) zum Empfang über einen einzigen Draht aufweisenden Bus die Mittel aufweist, zum Implementieren des Verfahrens irgendeines der Ansprüche 1 bis 8.
